# EUROPEAN PATENT SPECIFICATION

(11) **EP 2 797 264 B1**
(45) Date of publication and mention of the grant of the patent: **11.07.2018**
(21) Application number: 12859815.8
(22) Date of filing: 21.12.2012
(51) Int. Cl.: H04L 12/437

(54) **RING NETWORK PROTECTION REALIZING METHOD AND SYSTEM**
AUSFÜHRUNGSVERFAHREN FÜR EIN RINGNETZWERKSCHUTZ UND SYSTEM
PROCÉDÉ ET SYSTÈME POUR ASSURER LA PROTECTION D'UN RÉSEAU EN ANNEAU

(30) Priority: 21.12.2011 CN 201110432860
(43) Date of publication of application: 29.10.2014
(73) Proprietor: ZTE Corporation, Shenzhen, Guangdong 518057 (CN)
(72) Inventor: MA, Yuxia, Shenzhen Guangdong 518057 (CN); QU, Yanfeng, Shenzhen Guangdong 518057 (CN)
(74) Representative: Brevalex
(86) International application number: PCT/CN2012/087209
(87) International publication number: WO 2013/091576

(56) References cited:
- EP-A1- 2 224 644
- EP-A2- 0 431 635
- WO-A1-2004/043011
- CN-A- 101 447 848
- CN-A- 101 471 837
- CN-A- 101 729 182
- CN-A- 102 006 214
- US-A1- 2003 009 599

## Description

### TECHNICAL FIELD

The disclosure relates to ring protection technology, and more particularly to a method and system for implementing ring protection.

### BACKGROUND

A ring network is a common networking mode in practical packet transport network. Accordingly, ring protection is an important protection mode in the packet transport network. Generally, the ring protection is implemented by means of the following two modes. The first implementation mode refers to that switching is carried out at a failure point. Specifically, an ingress node transmits service traffic along a working path and switches the service traffic to a protection path in a reverse direction from a node adjacent to a failure, and the service traffic is transmitted along a protection path until transmitted to another node adjacent to the failure, and then is reverted back to the working path again. The second implementation mode refers to that switching is carried out at an ingress node so that service traffic is directly switched to a protection path to be transmitted. The first implementation mode is less in switch time but longer in service traffic transmission path and higher bandwidth occupation rate whereas the second implementation mode is more in switch time but shorter in service traffic transmission path and lower bandwidth occupation rate.

In conclusion, both the conventional methods for implementing ring protection have some defects.

Besides, to distinguish different service traffic, it is needed to configure a full-ring protection path for each working path in the conventional ring protection methods, which leads to high configuration workload. Moreover, when a failure occurs, protection groups need switch one by one, thereby resulting in more switch time.

EP 2 224 644 A1 discloses a protection method in a packet transport network. A protection path is established for a service data flow borne on a shared protection ring in the method, where the protection path includes a wrapping protection path and a steering protection path. Firstly, a first service data flow is sent through the wrapping protection path. Then, a service data flow node stops sending a second service data flow subsequent to the first service data flow to the wrapping protection path, and buffers the second service data flow. When the first service data flow completely passes by the service data flow node again, the buffered second service data flow is switched from the wrapping protection path to the steering protection path. A corresponding device and a corresponding system are also provided. Therefore, a disordering problem that occurs when a combination protection solution of the wrapping manner and the steering manner is applied in the packet transport network is solved.

CN 102006214 A discloses a shortcut protection method based on a path-bound MPLS-TP (Multi-Protocol Label Switching-Transmission Protocol), comprising the following steps of: configuring a ring network protection link: configuring a protection path for loopback protection and a Steering-protected path for an LSP (Logical Signal Processor) of an upper ring by a ring network node; and when the ring network generates faults, carrying out the processing steps of: (1) processing adjacent nodes of a fault link; and (2) processing adjacent nodes of a non-fault link. The invention can find the protocol support without topology and simultaneously improve the Steering protection speed, which has great significance on improving the performance of the ring network based on the MPLS-TP technology.

EP 0 431 635 A2 discloses that a ring type LAN with a fault processing system which detects a faulty station when a logical fault occurs at any of a plurality of stations making up the ring type LAN and which further restores the ring type LAN, which provides at each station at least a timer for measuring the transmission time of a beacon frame or other fault notifying frame and, when the timer runs out of time, forms a loopback or bypass with the adjoining station, temporarily removes the stations from the ring, has the removed stations detect by themselves if they are normal, and, when the results of detection are that they are normal, once again incorporates the stations, other than the one for which the time has run out, into the ring, thus finally rebuilding the ring type LAN in a state with just the faulty station removed from the ring.

US 2003/0009599 A1 discloses that a ring is configured that has multiple nodes connected by first and second channels. A distributing filter is provided that is configured to direct a first type of data to the first channel in the ring and a second type of data to the second channel in the ring. A fault is detected on at least one of the first and second channels in the ring. The distributing filter is adjusted to redirect data in the ring to avoid the fault.

WO 2004/043011 A1 presents Link Encapsulation Protocol (LEP) used to Multiple Services Ring (MSR) based on FE/GE/10GE aggregates in the way of preplan and connection based. LEP is provided for specific use on a N ring structure (N=1, 2, 3, 4, 5, ...,) consisting of the unidirectional (N-M) ringlets and M (1≤M).

CN 101729182 A discloses single-fiber bidirectional looped network protection method, system and device. An operating path between nodes of a single-fiber bidirectional looped network shares a shared protection channel with set wavelength. When the operating path between the two nodes generates fault, the shared protection device for controlling the fault generation between the receiving end node and the sending end node of the operating path is switched to a corresponding spare port from a main port, controls the middle node in the shared protection channel relative to the operating path to start the spare port of the relative shared protection device, and establishes the shared protection channel relative to the operating path. The shared protection channel sends a service signal born by the operating path generating faults.; In the method, an operating path loop is used to share one protection channel, and thereby the wavelength resources in the system are greatly saved.

CN 101447848 A discloses a method for protecting a ring network. Under the triggering condition that meets the implementation of the protection switching, a node on the ring network determines a section with fault and time slot of business of the node affected by the fault according to section ring-forming information and business routing information which are configured at the node in advance, and the business is switched onto a protection channel which does not pass through the section with the fault; the section ring-forming information lists section information which sequentially forms ring in the preset direction, and section information comprises section markers which are distributed in the adjacent nodes on the ring network in advance; and the business routing information lists business path information which takes the node as a source node and a sink node in the light of the time slot. The embodiment of the invention further discloses a network element device. The proposal of the invention can effectively shorten the switching time of the business and improve the signal quality after the switching.

CN 101471837A discloses an optical channel data unit shared protection ring, which comprises a first node for acquiring a pre-transmission signal before failure of a service channel between the first node and a second node and outputting the pre-transmission signal to a third node via a protection channel as well as bridging the user service of the first node to the protection channel after failure of the service channel between the first node and the second node and outputting to the third node; a third node for feeding through the protection channel and feeding the pre-transmission signal to the second node after receiving the pre-transmission signal and feeding the user service of the first node to the second node through the protection channel after failure of the service channel between the first node and the second node; and a second node for selectively receiving the user service of the first node on the protection channel after failure of the service channel between the first node and the second node. The technical scheme provided by the invention can quicken ring network protection switching speed.

### SUMMARY

In view of this, the disclosure provides a method and system for implementing ring protection, which are capable of protecting service traffic quickly while reducing the length of a transmission path of the service traffic.

To this end, a technical solution of the disclosure is implemented as follows.

A method for implementing ring protection includes that:
a shared working channel and a shared protection channel are established for each destination ring node forming a ring network;
when a failure occurs on the shared working channel during proceeding of a service traffic, the service traffic being transmitted is switched, at a position of the failure, from the shared working channel to the shared protection channel for transmission; and
an ingress ring node of the service traffic switches subsequent packets of the service traffic to the shared protection channel for transmission;
wherein the step that a shared working channel and a shared protection channel are established includes that:
   a forward shared channel and a reverse shared channel which serve as a working channel and a protection channel for each other are established; or
   two forward shared channels and two reverse shared channels are established, two of which are selected as working channels and the other two of which are selected as protection channels;
   wherein the step that a forward shared channel and a reverse shared channel are established includes that:
      a forward shared working channel and a reverse shared protection channel are established according to a longest path principle by taking two ring nodes adjacent to the destination ring node as starting points; and
      the step that two forward shared channels and two reverse shared channels are established includes that:
         two forward shared working channels and two reverse shared protection channels are established according to the longest path principle by taking the two ring nodes adjacent to the destination ring node as the starting points.

In the above solution, the step that the service traffic being transmitted is switched, at a position of the failure, from the shared working channel to the shared protection channel for transmission may include that:
one ring node, which receives the service traffic, of two ring nodes which result in the failure switches the service traffic to the shared protection channel for transmission.

In the above solution, when the service traffic being transmitted is switched to the shared protection channel for transmission, the method may further include that:
the other one of the two ring nodes which result in the failure switches the service traffic borne on the shared protection channel to the shared working channel.

In the above solution, the method may further include that:
after the failure is repaired, it reverts back at the position of the failure, and then the ingress ring node reverts back.

In the above solution, the step that it reverts back at the position of the failure may include that:
one ring node, which receives the service traffic being transmitted, of two ring nodes which result in the failure, directly transmits on the shared working channel the service traffic being received.

In the above solution, when the service traffic is directly transmitted on the shared working channel, the method may further include that:
the other one of the two ring nodes which result in the failure cancels the switching from the shared protection channel to the shared working channel.

The disclosure also provides a system for implementing ring protection, which includes: a configuration unit, a fault ring node and an ingress ring node, wherein
the configuration unit is configured to, for each destination ring node forming a ring network, establish a shared working channel and a shared protection channel;
the fault ring node is configured to, when a failure occurs on the shared working channel during proceeding of a service traffic, switch the service traffic being transmitted, at a position of the failure, from the shared working channel to the shared protection channel for transmission; and
the ingress ring node is configured to switch subsequent packets of the service traffic to the shared protection channel for transmission;
wherein the configuration unit is further configured to establish a forward shared channel and a reverse shared channel which serve as a working channel and a protection channel for each other; or establish two forward shared channels and two reverse shared channels, two of which are selected as working channels and the other two of which are selected as protection channels;
wherein the configuration unit is further configured to establish a forward shared working channel and a reverse shared protection channel according to a longest path principle by taking two ring nodes adjacent to the destination ring node as starting points; and establish two forward shared working channels and two reverse shared protection channels according to the longest path principle by taking the two ring nodes adjacent to the destination ring node as the starting points.

In the above solution, the fault ring node may further include a first ring node configured to switch the service traffic being transmitted to the shared protection channel for transmission.

In the above solution, the fault ring node may further include a second ring node configured to switch the service traffic borne on the shared protection channel to the shared working channel.

In the above solution, the fault ring node may be further configured to, after the failure is repaired, revert back at the position of the failure; and
the ingress ring node may be further configured to revert back.

In the above solution, the first ring node may be further configured to, when reverts back at the position of the failure, directly transmits the service traffic on the shared working channel.

In the above solution, the second ring node may be further configured to cancel the switching of the service traffic borne on the shared protection channel to the shared working channel.

In the method and system for implementing ring protection according to the disclosure, a shared working channel and a shared protection channel are established for each destination ring node forming a ring network, and when a failure occurs on the shared working channel during proceeding of the service traffic, service traffic is switched, at a position of the failure, from the shared working channel to the shared protection channel for transmission, so that less switch time can be implemented. An
ingress ring node of the service traffic switches subsequent service traffic to the shared protection channel for transmission, so that the length of a transmission path of the service traffic can be reduced, thus reducing the occupied bandwidth and accelerating the transmission of the service traffic.

In addition, after the failure is repaired, it reverts back at the position of the failure. Then, the ingress ring node reverts back to enable the service traffic to be directly borne on a working channel, so that the transmission of the service traffic may be further accelerated.

Besides, the shared working channel and the shared protection channel are established for each destination ring node forming a ring network, thus reducing configuration workload and facilitating an operation.

### BRIEF DESCRIPTION OF THE DRAWINGS

Fig. 1 is a flowchart illustrating a method for implementing ring protection according to the disclosure;
Fig. 2 is a flowchart illustrating a method for implementing ring protection according to an embodiment of the disclosure;
Fig. 3 is a schematic diagram illustrating an established shared channel according to an embodiment of the disclosure;
Fig. 4 is a schematic diagram illustrating a failure occurring in an embodiment of the disclosure; and

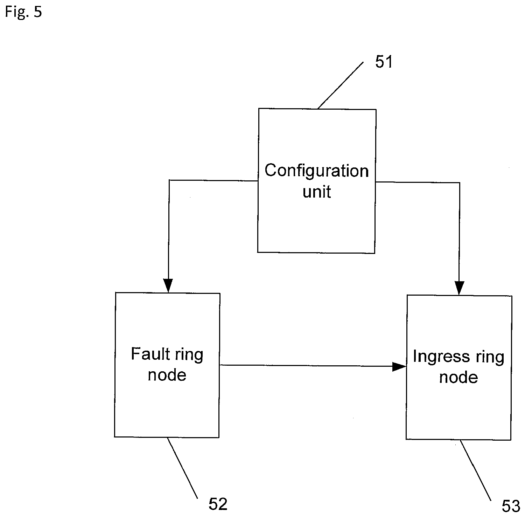

Fig. 5 is a schematic diagram illustrating the structure of a system for implementing ring protection according to the disclosure.

### DETAILED DESCRIPTION

The disclosure is further elaborated below in combination with the accompanying drawings and specific embodiments.

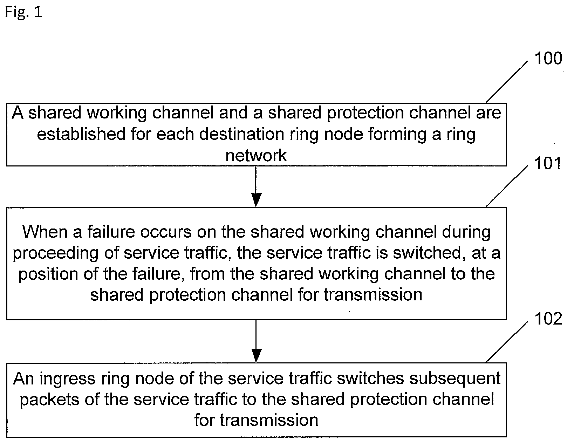

As shown in Fig. 1, a method for implementing ring protection according to the disclosure includes the following steps:
Step 100: A shared working channel and a shared protection channel are established for each destination ring node forming a ring network.

Here, for different service traffic, the destination ring node may be different, and in an actual application, a destination ring node may be determined according to the borne service.

The process that a shared working channel and a shared protection channel are established specifically includes that:
a forward shared channel and a reverse shared channel which serve as a working channel and a protection channel for each other are established; or two forward shared channels and two reverse shared channels are established, two of which are selected as working channels and the other two of which are selected as protection channels,

The process that a forward shared channel and a reverse shared channel are established specifically includes that:
a forward shared working channel and a reverse shared protection channel are established according to the longest path principle by taking two ring nodes adjacent to the destination ring node as starting points; and
accordingly, the process that two forward shared channels and two reverse shared channels are established specifically includes that:
   two forward shared working channels and two reverse shared protection channels are established according to the longest path principle by taking the two ring nodes adjacent to the destination ring node as the starting points.

In an actual application, a clockwise direction of physical nodes forming a ring network may be defined as a forward direction, and an anticlockwise direction of the physical nodes forming the ring network may be defined as a reverse direction, and vise versa. In other words, the forward direction and the reverse direction can be defined as needed as long as the connection of each physical node forming the ring network along a direction is defined as the forward direction, and the connection of each physical node forming the ring network along an opposite direction is defined as the reverse direction.

A specific process of establishing a shared channel may be implemented by using existing technology.

A working channel and a protection channel may be optionally selected as needed.

In the case where two forward shared channels and two reverse shared channels are established and where two of the established shared channels are selected as working channels and the other two of the established shared channels are selected as protection channels, the working channels can only serve as working channels instead of protection channels, and accordingly, the protection channels can only serve as protection channels instead of working channels. In an actual application, one of the foregoing two shared working channels and protection channels establishment modes may be selected as needed.

It should be noted here that Steps 101 and 102 are applicable to the foregoing two shared working channel and protection channel establishment modes. In other words, the switch of service traffic is implemented by the same way in the foregoing two shared working channel and protection channel establishment modes when a failure occurs.

Step 101: When a failure occurs on the shared working channel during proceeding of service traffic, the service traffic is switched, at a position of the failure, from the shared working channel to the shared protection channel for transmission, and then Step 102 is executed.

Here, the process that the service traffic is switched, at a position of the failure, from the shared working channel to the shared protection channel for transmission specifically includes that:
one ring node, which receives the service traffic, of two ring nodes which result in the failure switches the service traffic to the shared protection channel for transmission.

When the service traffic being transmitted is switched to the shared protection channel for transmission, the method may further include that: the other one of the two ring nodes which result in the failure switches the service traffic borne on the shared protection channel to the shared working channel.

Occurrence of a failure may be detected by using existing technology.

The other one of the two ring nodes which result in the failure switches the service traffic borne on the shared protection channel to the shared working channel so that in an actual application, a destination ring node only considers the service traffic received from the last receiving node forming the shared working channel as the service traffic sent to the destination ring node. That is, when a failure occurs, the destination ring node considers that the service traffic received from other receiving nodes is not sent to the destination ring node, and therefore the destination ring node forwards the received service traffic to the last receiving node forming the shared working channel and finally to the other one of the two ring nodes which result in the failure. In this case, the other one of the two ring nodes which result in the failure needs to switch the service traffic borne on the shared protection channel to the shared working channel, so as to ensure that the received service traffic can be transmitted to the destination ring node.

A specific switch process may be implemented by using existing technology.

Step 102: An ingress ring node of the service traffic switches subsequent packets of the service traffic to the shared protection channel for transmission.

Here, during the process of switching the service traffic being transmitted, at the position of the failure, from the shared working channel to the shared protection channel for transmission, the ingress ring node of the service traffic will detect the occurrence of a failure on the shared working channel, and thus may locally and quickly switch the service traffic to shorten the transmission path of the subsequent service traffic of the service traffic, thereby reducing the occupation of bandwidth.

The method may further include that:
after the failure is repaired, it revert back at the position of the failure, and then the ingress node reverts back.

The process that reverts back at the position of the failure may include that:
one ring node, which receives the service traffic being transmitted, of two ring nodes which result in the failure, directly transmits the service traffic on the shared working channel.

Accordingly, the method may further include that: the other one of the two ring nodes which result in the failure cancels the switching from the shared protection channel to the shared working channel.

The switch implemented when a failure occurs needs to be canceled after the failure is repaired. That is, one of the two ring nodes resulting in the failure which receives the service traffic, directly transmits it on the shared working channel, and accordingly, the other one of the two ring nodes which result in the failure cancels the switching from the shared protection channel to the shared working channel.

Here, repair of a failure may be detected by using existing technology.

After the ingress ring node reverts back, the subsequent packet of the service traffic is borne on the shared working channel.

The disclosure is further elaborated below in combination with an embodiment.

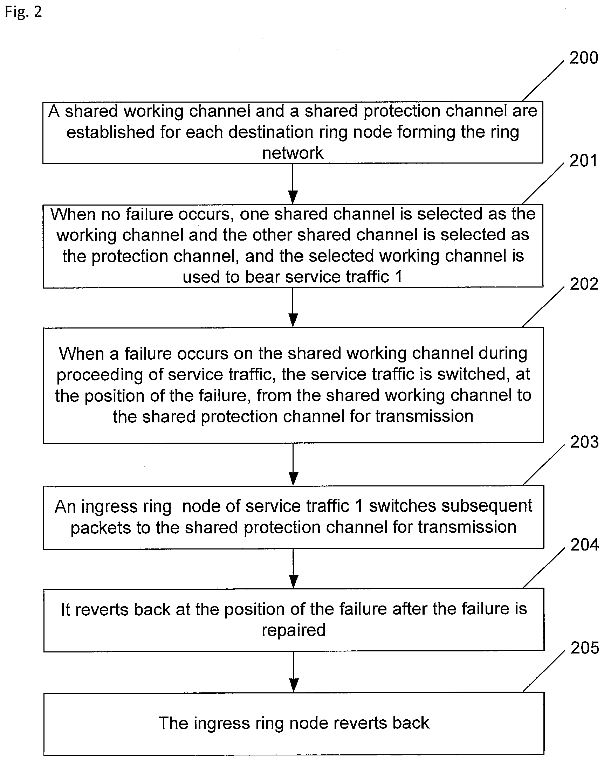

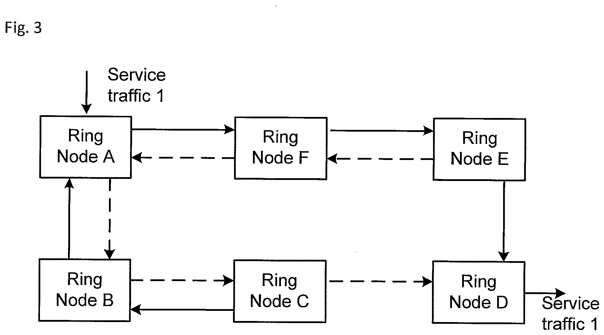

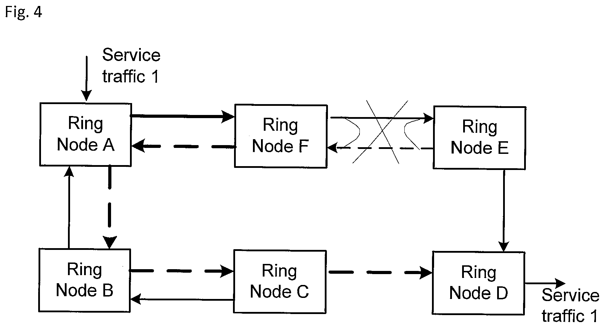

An application scenario of the embodiment is as follows: ring nodes A, B, C, D, E and F form a ring network, service traffic 1 enters the ring network from ring node A, that is, ring node A is an ingress ring node of service traffic 1, and a destination ring node corresponding to service traffic 1 is ring node D. As shown in Fig. 2, the method for implementing ring protection according to the embodiment includes the following steps:
Step 200: A shared working channel and a shared protection channel are established for each destination node forming the ring network.
   Specifically, a forward shared channel and a reverse shared channel which serve as a working channel and a protection channel for each other are established for the ring node D. As shown in Fig. 3, the two established shared channels include: a channel consisting of solid lines, that is, C-B-A-F-E-D, and a channel consisting of dotted lines, that is, E-F-A-B-C-D.
Step 201: When no failure occurs, one shared channel is selected as the working channel and the other shared channel is selected as the protection channel, and the selected working channel is used to bear service traffic 1.
   Here, in the embodiment, the shared channel consisting of solid lines is selected as the working channel, that is, the transmission path of service traffic 1 is A-F-E-D.
Step 202: When a failure occurs on the shared working channel during proceeding of service traffic, the service traffic is switched, at the position of the failure, from the shared working channel to the shared protection channel for transmission.
   Here, as shown in Fig. 4, it is assumed that a failure occurs between ring node F and ring node E, and this step is specifically implemented as follows:
   Ring Node F switches the received service traffic to the shared protection channel for transmission, that is, the ring node F switches the received service traffic to the channel consisting of the dotted lines. In this moment, the transmission path of service traffic 1 is A-F-A-B-C-D. Meanwhile, ring node E switches service traffic borne on the shared protection channel to the shared working channel.
Step 203: An ingress ring node of service traffic 1 switches subsequent packets to the shared protection channel for transmission, and then Step 204 is executed.
   In other words, the subsequent packets of service traffic 1 are borne on the channel consisting of the dotted lines. In this moment, the transmission path of service traffic 1 is A-B-C-D.
Step 204: It reverts back at the position of the failure after the failure is repaired, and then Step 205 is executed.
   Here, the repair of the failure refers to the repair of the failure between ring node F and ring node E. In this moment, ring node F switches the received service traffic to the shared working channel for transmission, that is, ring node F switches the received service traffic to the channel consisting of the solid lines. In this moment, the transmission path of service traffic 1 is still A-B-C-D. Meanwhile, node E cancels the switching from the shared protection channel to the shared working channel.
Step 205: The ingress node reverts back.

That is, ring node A re-bears service traffic 1 on the shared channel, i.e., the channel consisting of the solid lines, on which service traffic 1 is borne before the failure. In this moment, the transmission path of service traffic 1 is A-F-E-D.

To implement the foregoing method, a system for implementing ring protection is further disclosed. The system includes: a configuration unit 51, a fault ring node 52 and an ingress ring node 53.

The configuration unit 51 is configured to, for each destination ring node forming a ring network, establish a shared working channel and a shared protection channel.

The fault ring node 52 is configured to, when a failure occurs on the shared working channel during proceeding of service traffic, switch the service traffic, at a position of the failure, from the shared working channel to the shared protection channel for transmission.

The ingress ring node 53 is configured to switch subsequent packets of the service traffic to the shared protection channel for transmission.

The fault ring node 52 may further include a first ring node configured to switch the service traffic to the shared protection channel for transmission.

The fault ring node 52 may further include a second ring node configured to switch a service borne on the shared protection channel to the shared working channel.

Here, it should be noted that the first ring node is the one of the two ring nodes resulting in the failure which receives the service traffic currently being transmitted, and the second ring node is the other one of the two ring nodes which result in the failure.

The fault ring node 52 is further configured to, after the failure is repaired, revert back at the position of the failure.

The ingress ring node 53 is further configured to revert back.

When revert back at the position of the failure, the first ring node is further configured to, directly transmit the service traffic on the shared working channel.

Accordingly, the second ring node is further configured to cancel the switching from the shared protection channel to the shared working channel.

Here, the specific process of the configuration unit in the system disclosed herein has been elaborated hereinbefore, and therefore is not repeated here.

The above are merely the preferred embodiments of the disclosure, but are not intended to the scope of protection of the claims of the disclosure.

## Claims

1. A method for implementing ring protection, **characterized by** comprising:
for each destination ring node forming a ring network, establishing a shared working channel and a shared protection channel (S100);
when a failure occurs on the shared working channel during proceeding of a service traffic, switching the service traffic being transmitted, at a position of the failure, from the shared working channel to the shared protection channel for transmission (S101); and
switching, by an ingress ring node of the service traffic, subsequent packets of the service traffic to the shared protection channel for transmission (S102);
wherein the step of establishing a shared working channel and a shared protection channel comprises: establishing a forward shared channel and a reverse shared channel which serve as a working channel and a protection channel for each other; or
establishing two forward shared channels and two reverse shared channels, two of which are selected as working channels and the other two of which are selected as protection channels;
wherein the step of establishing a forward shared working channel and a reverse shared protection channel comprises: establishing a forward shared working channel and a reverse shared protection channel according to a longest path principle by taking two ring nodes adjacent to the destination ring node as starting points; and
wherein the step of establishing two forward shared channels and two reverse shared channels comprises: establishing two forward shared working channels and two reverse shared protection channels according to the longest path principle by taking the two ring nodes adjacent to the destination ring node as the starting points.

2. The method according to claim 1, wherein the step of switching the service traffic being transmitted, at a position of the failure, from the shared working channel to the shared protection channel for transmission comprises:
switching, by one ring node, which receives the service traffic being transmitted, of two ring nodes which result in the failure, the service traffic being transmitted to the shared protection channel for transmission.

3. The method according to claim 2, further comprising: when the service traffic being transmitted is switched to the shared protection channel for transmission,
switching, by the other one of the two ring nodes which result in the failure, the service traffic borne on the shared protection channel to the shared working channel.

4. The method according to claim 1, further comprising:
after the failure is repaired, reverting back at the position of the failure; and
then reverting back by the ingress ring node.

5. The method according to claim 4, wherein the step of reverting back at the position of the failure comprises:
directly transmitting, by one ring node, which receives the service traffic, of two ring nodes which result in the failure, on the shared working channel, the service traffic being received.

6. The method according to claim 5, further comprising: when the service traffic is directly transmitted on the shared working channel,
cancelling, by the other one of the two ring nodes which result in the failure, the switching from the shared protection channel to the shared working channel.

7. A system for implementing ring protection, **characterized by** comprising: a configuration unit (51), a fault ring node (52) and an ingress ring node (53), wherein
the configuration unit (51) is configured to, for each destination ring node forming a ring network, establish a shared working channel and a shared protection channel;
the fault ring node (52) is configured to, when a failure occurs on the shared working channel during proceeding of a service traffic, switch the service traffic being transmitted, at a position of the failure, from the shared working channel to the shared protection channel for transmission; and
the ingress ring node (53) is configured to switch subsequent packets of the service traffic to the shared protection channel for transmission;
wherein the configuration unit (51) is further configured to establish a forward shared channel and a reverse shared channel which serve as a working channel and a protection channel for each other; or establish two forward shared channels and two reverse shared channels, two of which are selected as working channels and the other two of which are selected as protection channels;
wherein the configuration unit (51) is further configured to establish a forward shared working channel and a reverse shared protection channel according to a longest path principle by taking two ring nodes adjacent to the destination ring node as starting points; and establish two forward shared working channels and two reverse shared protection channels according to the longest path principle by taking the two ring nodes adjacent to the destination ring node as the starting points.

8. The system according to claim 7, wherein the fault ring node (52) further comprises a first ring node configured to switch the service traffic being transmitted to the shared protection channel for transmission.

9. The system according to claim 8, wherein the fault ring node (52) further comprises a second ring node configured to switch the service traffic borne on the shared protection channel to the shared working channel.

10. The system according to claim 7, 8 or 9, wherein the fault ring node (52) is further configured to, after the failure is repaired, revert back at the position of the failure; and
the ingress ring node (53) is further configured to revert back.

11. The system according to claim 10, wherein the first ring node is further configured to, when reverting back at the position of the failure, directly transmit on the shared working channel the service traffic being received.

12. The system according to claim 11, wherein the second ring node is further configured to cancel the switching from the shared protection channel to the shared working channel.

## Patentansprüche

1. Verfahren zur Durchführung eines Ringschutzes, umfassend die folgenden Schritte: für jeden Zielring -Knoten, der ein Ringnetzwerk bildet, Einrichten eines geteilten Arbeitskanals und eines geteilten Schutzkanals (S100); wenn auf dem geteilten Arbeitskanal während eines Dienstleistungsbetriebs ein Fehler auftritt, Umschalten des stattfindenden Dienstleistungsbetriebs an der Fehlerstelle von dem geteilten Arbeitskanal zu dem geteilten Schutzkanal für die Übertragung (S101) und Schalten nachfolgender Pakete des Dienstleistungsverkehrs durch einen Eingangs -Ringknoten des Dienstleistungsverkehrs zu dem geteilten Schutzkanal für die Übertragung (S102); wobei der Schritt der Errichtung eines geteilten Arbeitskanals und eines geteilten Schutzkanals folgendes umfaßt: Errichten eines geteilten Vorwärtskanals und eines geteilten Rückwärtskanals, die füreinander als ein Arbeitskanal und ein Schutzkanal dienen; oder Errichten von zwei geteilten Vorwärtskanälen und zwei geteilten Rückwärtskanälen, von denen zwei als Arbeitskanäle und die anderen zwei als Schutzkanäle ausgewählt werden; wobei des weiteren der Schritt der Errichtung eines geteilten Vorwärts -Arbeitskanals und eines geteilten Rückwärts -Arbeitskanals folgendes umfaßt: Errichten eines geteilten Vorwärts -Arbeitskanals und eines geteilten Rückwärts -Schutzkanals gemäß einem Prinzip des längstens Weges, indem zwei Ringknoten neben dem Bestimmungs -Ringknoten als Startpunkte genommen werden; und wobei schließlich der Schritt der Errichtung von zwei geteilten Vorwärtskanälen und zwei geteilten Rückwärtskanälen folgendes umfaßt: Errichten von zwei geteilten Vorwärts -Arbeitskanälen und zwei geteilten Rückwärts - Schutzkanälen gemäß dem Prinzip des längsten Weges, indem die beiden Ringknoten neben dem Bestimmungs -Ringknoten als Startpunkte genommen werden.

2. Verfahren nach Anspruch 1, **dadurch gekennzeichnet, dass** der Schritt des Schaltens des übertragenen Dienstleistungsbetriebs an einer Fehlstelle von dem geteilten Arbeitskanal zu dem geteilten Schutzkanal zur Übertragung folgendes umfaßt: Schalten um einen den zu übermittelnden Dienstleistungsbetrieb betreffenden Ringknoten der beiden Ringknoten, der zu dem Fehler führt, wobei der Dienstleistungsbetrieb zwecks Übertragung dem geteilten Schutzkanal übermittelt wird.

3. Verfahren nach Anspruch 2, **dadurch gekennzeichnet, dass** dann, wenn der übermittelte Dienstleistungsbetrieb zwecks Übertragung zu dem geteilten Schutzkanal geschaltet wird, Schalten zu dem geteilten Arbeitskanal durch den anderen der beiden Ringknoten, der zu dem Fehler führt, wobei der Dienstleistungsbetrieb auf dem geteilten Schutzkanal beruht.

4. Verfahren nach Anspruch 1, **dadurch gekennzeichnet, dass** nachdem der Fehler repariert ist, Zurückgehen an die Stelle des Fehlers und dann Zurückgehen mit Hilfe des Eingangs -Ringknotens.

5. Verfahren nach Anspruch 4, **dadurch gekennzeichnet, dass** der Schritt des Zurückgehens an die Stelle des Fehlers folgendes umfaßt: Direktübertragung mit Hilfe eines Ringknotens, der den Dienstleistungsbetrieb empfängt, von zwei Ringknoten, die zu dem Fehler führen, und zwar auf dem geteilten Arbeitskanal, wobei der Dienstleistungsbetrieb empfangen wird.

6. Verfahren nach Anspruch 5, **dadurch gekennzeichnet, dass** dann, wenn der Dienstleistungsbetrieb direkt auf den geteilten Arbeitskanal übertragen wird, Annullieren durch den anderen der zwei Ringknoten, die zu dem Fehler führen durch Schalten von dem geteilten Schutzkanal zu dem geteilten Arbeitskanal.

7. System zur Durchführung eines Ringschutzes, **gekennzeichnet durch** eine Gestaltungseinheit (51), einen fehlerhaften Ringknoten (52) und einen Eingangs -Ringknoten (53), wobei die Gestaltungseinheit (51) so gebaut ist, dass für jeden Ziel -Ringknoten ein Ringnetzwerk gebildet wird, ein geteilter Arbeitskanal und ein geteilter Schutzkanal errichtet werden; der fehlerhafte Ringknoten (52) so gebaut ist, dass dann, wenn auf dem geteilten Arbeitskanal, während ein Dienstleistungsbetrieb vor sich geht, ein Fehler auftritt, an einer Stelle des Fehlers der Dienstleistungsbetrieb von dem geteilten Arbeitskanal zu dem geteilten Schutzkanal zur Übertragung übermittelt wird; und der Eingangs -Ringknoten (53) gestaltet wird, um aufeinanderfolgende Pakete des Dienstleistungsbetriebs zu dem geteilten Schutzkanal zur Übertragung geschaltet werden; wobei die Gestaltungseinheit (51) des weiteren so gebaut ist, dass ein geteilter Vorwärtskanal und ein geteilter Rückwärtskanal errichtet werden, die als Arbeitskanal und ein Schutzkanal zueinander dienen; oder zwei geteilte Vorwärtskanäle und zwei geteilte Rückwärtskanäle errichtet werden, von denen zwei als Arbeitskanäle und die anderen beiden als Schutzkanäle ausgewählt werden; und wobei die Gestaltungseinheit (51) des weiteren so gebaut ist, dass ein geteilter Vorwärts -Arbeitskanal und ein geteilter Rückwärts -Schutzkanal entsprechend dem Prinzip eines längsten Weges errichtet werden, indem zwei Ringknoten neben den Ziel -Ringknoten als Startpunkte genommen werden und zwei geteilte Vorwärts -Arbeitskanäle sowie zwei geteilte Rückwärts -Schutzkanäle gemäß dem Prinzip des längsten Weges dadurch errichtet werden, dass zwei Ringknoten neben dem Ziel -Ringknoten als Startpunkte genommen werden.

8. System nach Anspruch 7, **dadurch gekennzeichnet, dass** der Fehler -Ringknoten (52) des weiteren einen ersten Ringknoten aufweist, der dazu dient, den Dienstleistungsbetrieb zu schalten, der zu dem geteilten Schutzkanal zwecks Übertragung übermittelt wird.

9. System nach Anspruch 8, **dadurch gekennzeichnet, dass** der Fehler -Ringknoten (52) des weiteren einen zweiten Ringknoten aufweist, der dazu dient, den Dienstleistungsbetrieb, der von dem geteilten Schutzkanal zu dem geteilten Arbeitskanal herrührt, zu schalten.

10. System nach Anspruch 7, 8 oder 9, **dadurch gekennzeichnet, dass** der Fehler -Ringkanal (52) des weiteren so gestaltet ist, dass, nachdem der Fehler behoben ist, an die Stelle des Fehlers zurückgekehrt wird; und dass der Eingangs -Ringknoten (53) auch gestaltet ist, um zurückzukehren.

11. System nach Anspruch 10, **dadurch gekennzeichnet, dass** der erste Ringknoten des weiteren so gestaltet ist, dass dann, wenn er an die Stelle des Fehlers zurückkehrt, direkt auf dem geteilten Arbeitskanal überträgt, der den Dienstleistungsbetrieb empfängt.

12. System nach Anspruch 11, **dadurch gekennzeichnet, dass** der zweite Ringknoten des weiteren so gestaltet ist, dass das Schalten von dem geteilten Schutzkanal zu dem geteilten Arbeitskanal aufgehoben wird.

## Revendications

1. Procédé d'implémentation de protection d'anneau, **caractérisé en ce qu'**il comprend :
pour chaque noeud d'anneau de destination formant un réseau en anneau, l'établissement d'un canal de travail partagé et d'un canal de protection partagé (S100) ;
lorsqu'une panne survient sur le canal de travail partagé pendant le déroulement d'un trafic de service, la commutation du trafic de service transmis, à une position de la panne, du canal de travail partagé au canal de protection partagé en vue d'une transmission (S101) ; et
la commutation, par un noeud d'anneau d'entrée du trafic de service, de paquets ultérieurs du trafic de service au canal de protection partagé en vue d'une transmission (S102) ;
dans lequel l'étape d'établissement d'un canal de travail partagé et d'un canal de protection partagé comprend : l'établissement d'un canal partagé aller et d'un canal partagé retour qui servent de canal de travail et de canal de protection l'un pour l'autre ; ou
l'établissement de deux canaux partagés aller et de deux canaux partagés retour, dont deux sont sélectionnés en tant que canaux de travail et dont les deux autres sont sélectionnés en tant que canaux de protection ;
dans lequel l'étape d'établissement d'un canal de travail partagé aller et d'un canal de protection partagé retour comprend : l'établissement d'un canal de travail partagé aller et d'un canal de protection partagé retour selon un principe du trajet le plus long en prenant deux noeuds d'anneau adjacents au noeud d'anneau de destination en tant que points de départ ; et
dans lequel l'étape d'établissement de deux canaux partagés aller et de deux canaux partagés retour comprend : l'établissement de deux canaux de travail partagés aller et de deux canaux de protection partagés retour selon le principe du trajet le plus long en prenant les deux noeuds d'anneau adjacents au noeud d'anneau de destination en tant que points de départ.

2. Procédé selon la revendication 1, dans lequel l'étape de commutation du trafic de service transmis, à une position de la panne, du canal de travail partagé au canal de protection partagé en vue d'une transmission comprend :
la commutation, par un noeud d'anneau, qui reçoit le trafic de service transmis, de deux noeuds d'anneau qui aboutissent à la panne, le trafic de service étant transmis au canal de protection partagé en vue d'une transmission.

3. Procédé selon la revendication 2, comprenant en outre : lorsque le trafic de service transmis est commuté au canal de protection partagé en vue d'une transmission,
la commutation, par l'autre des deux noeuds d'anneau qui aboutissent à la panne, du trafic de service supporté sur le canal de protection partagé au canal de travail partagé.

4. Procédé selon la revendication 1, comprenant en outre :
après que la panne est réparée, le retour à la position de la panne ; puis le retour par le noeud d'anneau d'entrée.

5. Procédé selon la revendication 4, dans lequel l'étape de retour à la position de la panne comprend :
la transmission directe, par un noeud d'anneau, qui reçoit le trafic de service, de deux noeuds d'anneau qui aboutissent à la panne, sur le canal de travail partagé, du trafic de service reçu.

6. Procédé selon la revendication 5, comprenant en outre : lorsque le trafic de service est transmis directement sur le canal de travail partagé,
l'annulation, par l'autre des deux noeuds d'anneau qui aboutissent à la panne, de la commutation du canal de protection partagé au canal de travail partagé.

7. Système d'implémentation de protection d'anneau, **caractérisé en ce qu'**il comprend : une unité de configuration (51), un noeud d'anneau par défaut (52) et un noeud d'anneau d'entrée (53), dans lequel
l'unité de configuration (51) est configurée, pour chaque noeud d'anneau de destination formant un réseau en anneau, pour établir un canal de travail partagé et un canal de protection partagé ;
le noeud d'anneau par défaut (52) est configuré, lorsqu'une panne survient sur le canal de travail partagé pendant le déroulement d'un trafic de service, pour commuter le trafic de service transmis, à une position de la panne, du canal de travail partagé au canal de protection partagé en vue d'une transmission ; et
le noeud d'anneau d'entrée (53) est configuré pour commuter des paquets ultérieurs du trafic de service au canal de protection partagé en vue d'une transmission ;
dans lequel l'unité de configuration (51) est en outre configurée pour établir un canal partagé aller et un canal partagé retour qui servent de canal de travail et de canal de protection l'un pour l'autre ; ou établir deux canaux partagés aller et deux canaux partagés retour, dont deux sont sélectionnés en tant que canaux de travail et dont les deux autres sont sélectionnés en tant que canaux de protection ;
dans lequel l'unité de configuration (51) est en outre configurée pour établir un canal de travail partagé aller et un canal de protection partagé retour selon un principe du trajet le plus long en prenant deux noeuds d'anneau adjacents au noeud d'anneau de destination en tant que points de départ ; et établir deux canaux de travail partagés aller et deux canaux de protection partagés retour selon le principe du trajet le plus long en prenant les deux noeuds d'anneau adjacents au noeud d'anneau de destination en tant que points de départ.

8. Système selon la revendication 7, dans lequel le noeud d'anneau par défaut (52) comprend en outre un premier noeud d'anneau configuré pour commuter le trafic de service transmis au canal de protection partagé en vue d'une transmission.

9. Système selon la revendication 8, dans lequel le noeud d'anneau par défaut (52) comprend en outre un second noeud d'anneau configuré pour commuter le trafic de service supporté sur le canal de protection partagé au canal de travail partagé.

10. Système selon la revendication 7, 8 ou 9, dans lequel le noeud d'anneau par défaut (52) est en outre configuré pour, après que la panne est réparée, retourner à la position de la panne ; et
le noeud d'anneau d'entrée (53) est en outre configuré pour retourner en arrière.

11. Système selon la revendication 10, dans lequel le premier noeud d'anneau est en outre configuré, lorsqu'il retourne à la position de la panne, pour transmettre directement sur le canal de travail partagé le trafic de service reçu.

12. Système selon la revendication 11, dans lequel le second noeud d'anneau est en outre configuré pour annuler la commutation du canal de protection partagé au canal de travail partagé.
